Europäisches Patentamt

European Patent Office

Office européen des brevets

(11) Veröffentlichungsnummer: **0 379 083**

**A1**

## (12) EUROPÄISCHE PATENTANMELDUNG

(21) Anmeldenummer: 90100613.0

(22) Anmeldetag: **12.01.90**

(51) Int. Cl.⁵: **C07C 37/72, C02F 1/26**

(30) Priorität: **19.01.89 DE 3901447**

(43) Veröffentlichungstag der Anmeldung:
**25.07.90 Patentblatt 90/30**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Stumpp, Michael, Dr.**
**An der Marlach 13**
**D-6705 Deidesheim(DE)**
Erfinder: **Neumann, Peter, Dr.**
**Poststrassse 28**
**D-6800 Mannheim 31(DE)**

(54) **Verfahren zur Extraktion von Phenolen aus wässrigen Lösungen.**

(57) Die vorliegende Erfindung betrifft ein Verfahren zur Extraktion von Phenolen aus wäßrigen Lösungen, bei dem man als Extraktionsmittel 2-Ethylhexansäure verwendet.

EP 0 379 083 A1

## Verfahren zur Extraktion von Phenolen aus wäßrigen Lösungen

Die vorliegende Erfindung betrifft ein Verfahren zur Extraktion von Phenolen aus wäßrigen Lösungen, bei dem als Extraktionsmittel 2-Ethylhexansäure verwendet wird.

Es ist bekannt, Phenole aus Industrieabwässern, die z.B. bei der Kohlevergasung, Kohleverflüssigung, Erdölverarbeitung oder Phenolharzherstellung anfallen, durch Extraktion mit einem Lösungsmittel zu entfernen. Beim ältesten großtechnisch angewandten Verfahren, dem Benzol-Lauge-Verfahren, wird Benzol als Extraktionsmittel und anschließend Natronlauge zur Rückextraktion des Phenols aus der Benzolphase verwendet. Infolge des geringen Extraktionsvermögens von Benzol und aufgrund des sicherheitstechnischen Aufwandes, der beim Umgang mit karzinogenen Stoffen wie Benzol zu treffen ist, wird dieses Verfahren praktisch nicht mehr angewandt.

Eine Verbesserung der Extraktion von Phenolen wird mit Extraktionsmitteln wie Diisopropylether, n-Butylacetat und 2-Methylpentanon-4 (z.B. DD-PS 157 500) erreicht. Weiter ist ein Verfahren zur Extraktion von Phenolen bekannt, bei dem man dem Extraktionsmittel Amine oder deren Salze mit Mineralsäuren zusetzt (DE-OS 34 36 349). Die bekannten Verfahren sind jedoch nicht in jedem Falle zufriedenstellend.

So sind z.B. bei der Verwendung von Diisopropylether oder Butylacetat als Extraktionsmittel aufgrund des niedrigen Flammpunktes dieser Lösungsmittel erhöhte sicherheitstechnische Vorkehrungen zu treffen. Ferner treten bei der Verwendung von Butylacetat wegen seiner relativ großen Löslichkeit in Wasser relativ große Verluste an Extraktionsmittel auf, wodurch der Gehalt an organischen Verbindungen in der Wasserphase in unvorteilhafter Weise erhöht wird.

Es wurde nun ein vorteilhaftes Verfahren zur Extraktion von Phenolen aus wäßrigen Lösungen gefunden, welches dadurch gekennzeichnet ist, daß man als Extraktionsmittel 2-Ethylhexansäure verwendet.

2-Ethylhexansäure zeigt ein hohes Extraktionsvermögen gegenüber Phenolen. Sie zeichnet sich weiter durch einen sehr niedrigen Dampfdruck, einen hohen Flammpunkt und eine vergleichsweise geringe Wasserlöslichkeit aus. Außerdem läßt sich nach der Extraktion im Abwasser verbleibende 2-Ethylhexansäure biologisch leicht abbauen. Aufgrund dieser Vorteile gegenüber den herkömmlichen Extraktionsmitteln reduzieren sich der sicherheitstechnische und ökologische Aufwand bei der Extraktion von Phenolen, so daß sich das Verfahren in sehr wirtschaftlicher Weise zur Extraktion von Phenolen aus Abwässern anwenden läßt.

2-Ethylhexansäure steht als wohlfeiles Lösungsmittel zur Verfügung und wird beispielsweise durch Oxidation von 2-Ethylhexanol erhalten.

Die Konzentration der Phenole in den zu extrahierenden wäßrigen Lösungen kann von geringen Konzentrationen, z.B. ein Phenolgehalt von etwa 0,1 Gew.%, bis zur Sättigungskonzentration reichen. Hohe Konzentrationen an Phenolen werden z.B. bei der azeotropen Entfernung der Phenole mit Wasserdampf aus Phenole enthaltenden Reaktionsgemischen erhalten. Als Phenole, die nach dem erfindungsgemäßen Verfahren extrahiert werden können, kommen neben dem unsubstituierten Phenol ($C_6H_5OH$) beispielsweise Alkylphenole, z.B. Kresole, Xylenole, mehrwertige Phenole, z.B. Resorcin, und Polyphenole, z.B. Hydroxydiphenyle, Dihydrodiphenyle, Dihydroxydiphenylmethane, in Betracht.

Die Extraktion kann beispielsweise kontinuierlich im Gegenstrom in einem mehrstufigen Extraktor erfolgen, wobei infolge der hohen Verteilungs-Koeffizienten der Extraktionsmittelbedarf, bezogen auf die wäßrige Phase, gering ist, so daß das Verhältnis wäßrige Phase : organische Phase bis etwa 50 : 1 betragen kann. Auf diese Weise ist eine starke Anreicherung der Phenole im Extrakt möglich. Das große Extraktionsvermögen des Extraktionsmittels erlaubt es aber auch, einstufig, z.B. im Rührkessel, zu extrahieren, wobei das Verhältnis wäßrige Phase : organische Phase bis etwa 10 : 1 betragen kann.

Die Isolierung der Phenole aus dem Extrakt erfolgt zweckmäßig auf destillativem Wege. Wegen des hohen Siedepunktes von 2-Ethylhexansäure werden die leichter flüchtigen Phenole wie $C_6H_5OH$ im allgemeinen als Destillat erhalten. Die nach dem Abdestillieren des Phenols als Destillationsrückstand verbleibende 2-Ethylhexansäure wird zweckmäßig ohne weitere Aufarbeitung in die Extraktion zurückgeführt.

Die folgenden Beispiele veranschaulichen die Erfindung. Der Gehalt der wäßrigen Lösungen an den Phenolen wurde jeweils gaschromatographisch bestimmt.

Beispiel 1

250 ml einer Phenol($C_6H_5OH$)-gesättigten wäßrigen Lösung mit einem Phenol-Gehalt von 75 500 Gew.ppm wurde mit 250 ml 2-Ethylhexansäure durch Schütteln in einem Schütteltrichter extrahiert. Nach Abtrennen der organischen Phase enthielt die wäßrige Phase 1 200 Gew.ppm Phenol.

Die nach der ersten Extraktion erhaltene wäßrige Phase wurde noch zwei weitere Male mit je 250 ml 2-Ethylhexansäure extrahiert. Nach der zweiten Extraktion betrug der Phenol-Gehalt in der wäßrigen Phase 310 Gew.ppm, nach der dritten Extraktion betrug der Phenol-Gehalt der wäßrigen Phase 72 Gew.ppm.

Bereits in der ersten Stufe der Extraktion war der Phenol-Gehalt der wäßrigen Lösung um mehr als 98,4 % reduziert worden.

Beispiel 2

Entsprechend Beispiel 1 wurden 250 ml einer o-Kresol-gesättigten wäßrigen Lösung mit einem o-Kresol-Gehalt der gesättigten Lösung von 25 400 Gew.ppm in insgesamt drei Extraktionsstufen mit jeweils 250 ml 2-Ethylhexansäure extrahiert. Der o-Kresolgehalt der jeweils erhaltenen wäßrigen Phase betrug
- nach der ersten Extraktion 137 Gew.ppm
- nach der zweiten Extraktion 48 Gew.ppm
- nach der dritten Extraktion 4 Gew.ppm.

Bereits in der ersten Stufe der Extraktion war der o-Kresol-Gehalt der wäßrigen Lösung um mehr als 99,4 % reduziert worden.

Beispiel 3

Man verfährt wie in Beispiel 2 beschrieben, wobei jedoch anstelle der o-Kresol-gesättigten eine m-Kresol-gesättigte wäßrige Lösung (m-Kresolgehalt von 19 600 Gew.ppm) extrahiert wurde.

Der m-Kresolgehalt der jeweils erhaltenen wäßrigen Phase betrug
- nach der ersten Extraktion 100 Gew.ppm
- nach der zweiten Extraktion 48 Gew.ppm
- nach der dritten Extraktion 4 Gew.ppm.

Beispiel 4

Man verfährt wie in Beispiel 2 beschrieben, wobei jedoch anstelle der o-Kresol-gesättigten eine p-Kresol-gesättigte wäßrige Lösung (p-Kresolgehalt von 17 300 Gew.ppm) extrahiert wurde.

Der p-Kresolgehalt der jeweils erhaltenen wäßrigen Phase betrug
- nach der ersten Extraktion 83 Gew.ppm
- nach der zweiten Extraktion 35 Gew.ppm
- nach der dritten Extraktion 5 Gew.ppm.

Ansprüche

1. Verfahren zur Extraktion von Phenolen aus wäßrigen Lösungen, dadurch gekennzeichnet, daß man als Extraktionsmittel 2-Ethylhexansäure verwendet.

2. Verfahren nach Anspruch 1, dadurch gekennzeichnet, daß man die Extraktion kontinuierlich und im Gegenstrom durchführt.

3. Verfahren nach Anspruch 1, dadurch gekennzeichnet, daß man die Extraktion einstufig durchführt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 228 957 (ATOCHEM)<br>* Seite 2, Zeilen 40-51; Ansprüche 1,3,7 *<br><br>--- | 1-3 | C 07 C 37/72<br>C 02 F 1/26 |
| A | US-A-4 695 410 (LYNCH)<br>* Spalte 2, Zeilen 44-46; Anspruch 1 *<br>----- | 1 | |

**RECHERCHIERTE SACHGEBIETE (Int. Cl.5)**

C 07 C 37/00

Der vorliegende Recherchenbericht wurde für alle Patentansprüche erstellt

| Recherchenort | Abschlußdatum der Recherche | Prüfer |
|---|---|---|
| BERLIN | 11-04-1990 | PROBERT C.L. |